# EUROPEAN PATENT APPLICATION

(11) **EP 4 687 321 A1**
(43) Date of publication of application: **04.02.2026**
(21) Application number: 24192403.4
(22) Date of filing: 01.08.2024
(51) Int. Cl.: H04L 9/08, G02B 6/27

(54) **METHOD AND SYSTEM FOR QUANTUM KEY DISTRIBUTION AND QUANTUM KEY DISTRIBUTION NETWORK**

(71) Applicant: Terra Quantum AG, 9000 St. Gallen (CH)
(72) Inventor: Kirsanov, Nikita, 9000 St. Gallen (CH); Vinokour, Valerii, 9000 St. Gallen (CH)
(74) Representative: Lucke, Andreas

(57) **Abstract**

The present disclosure pertains to a method for quantum key distribution in a system which comprises a first data processing device (10a) associated with a first quantum key distribution party, a polarization controller (na), and a polarizing beam splitter (12a). The method comprises: transmitting, by the first data processing device (10a), first optical pulses which encode a bit sequence for quantum key distribution; polarizing, by the polarization controller (11a) and based on routing data indicating a further quantum key distribution party or a further data processing device, the first optical pulses such that second optical pulses are provided which are linearly polarized in a first polarization direction or in a second polarization direction perpendicular to the first polarization direction; and routing, by the polarizing beam splitter (12a), the second optical pulses towards at least a second data processing device (10b) associated with a second quantum key distribution party if the second optical pulses are polarized in the first polarization direction and towards at least a third data processing device (10c) associated with a third quantum key distribution party if the second optical pulses are polarized in the second polarization direction. Further, a system for quantum key distribution and a quantum key distribution network are disclosed.

## Description

### Technical Field

The present disclosure refers to a method and a system for quantum key distribution (QKD) involving multiple quantum key distribution parties. Further, a quantum key distribution network is disclosed.

### Background

In known concepts for QKD-networks comprising more than one sender and one receiver, optical switches are used for directing signals.

For example, in CN 113 364 588 A, which pertains to a QKD network based on trusted relay, routing to different users is carried out via such switches.

In another example in the context of QKD networks, KR 102 155 350 B1 describes routing to different users via wavelength. CN 205 039 835 U is directed at a multiplexing quantum key distribution network system in which routing is done via a grating. Another QKD network is disclosed in CN 115 883 089 A, which includes a polarization selective phase modulation interferometer.

### Summary

It is an object of the present disclosure to provide improved techniques for transmitting data via quantum key distribution involving multiple parties.

For solving the problem, a method and a system for quantum key distribution are provided according to the independent claims. Moreover, a quantum key distribution network is provided. Further embodiments are disclosed in dependent claims.

According to one aspect, a method for quantum key distribution in a system is provided which comprises a first data processing device associated with a first quantum key distribution party, a polarization controller, and a polarizing beam splitter. The method comprises: transmitting (and/or emitting), by the first data processing device, first optical pulses which encode a bit sequence for quantum key distribution; polarizing, by the polarization controller and based on routing data (e.g., indicating a further quantum key distribution party or a further data processing device), the first optical pulses such that second optical pulses are provided (in particular, generated) which are linearly polarized in a first polarization direction or in a second polarization direction perpendicular to the first polarization direction; and routing, by the polarizing beam splitter, the second optical pulses
- towards (at least) a second data processing device associated with a second quantum key distribution party if the second optical pulses are polarized in the first polarization direction and
- towards (at least) a third data processing device associated with a third quantum key distribution party if the second optical pulses are polarized in the second polarization direction.

According to another aspect, a system for quantum key distribution is provided, the system comprising:
- a first data processing device associated with a first quantum key distribution party and configured to transmit (and/or emit) first optical pulses which encode a bit sequence for quantum key distribution;
- a polarization controller configured to polarize, based on routing information (e.g., indicating a further quantum key distribution party or a further data processing device), the first optical pulses such that second optical pulses are provided (in particular, generated) which are linearly polarized in a first polarization direction or in a second polarization direction perpendicular to the first polarization direction; and
- a polarizing beam splitter configured to route the second optical pulses
   - towards (at least) a second data processing device associated with a second quantum key distribution party if the second optical pulses are polarized in the first polarization direction and
   - towards (at least) a third data processing device associated with a third quantum key distribution party if the second optical pulses are polarized in the second polarization direction.

Further, quantum key distribution network is provided comprising the system for quantum key distribution, the second data processing device, and the third data processing device.

In the claimed invention, light polarization may be used to direct signals to specific users without interference, thus reducing the risk of an eavesdropping. Further, signal losses maybe substantially reduced, in particular in comparison to employing optical switches for routing to different users. The claimed invention may moreover provide a scalable solution. By including additional branching points with corresponding beamsplitters and polarization controllers, a larger network of users can be handled.

The method may further comprise, for the second optical pulses having been routed towards at least the second data processing device (in particular, towards at least one data processing device excluding the third data processing device):
- polarizing, by a second polarization controller and based on second routing data, the second optical pulses such that third optical pulses are provided and/or generated which are linearly polarized in a third polarization direction or in a fourth polarization direction perpendicular to the third polarization direction; and
- routing, by a second polarizing beam splitter, the third optical pulses towards at least the second data processing device if the third optical pulses are polarized in the third polarization direction and towards at least a fourth data processing device associated with a fourth quantum key distribution party if the third optical pulses are polarized in the fourth polarization direction.

The method may further comprise, for the second optical pulses having been routed towards at least the third data processing device (in particular, towards at least one data processing device excluding the second data processing device):
- polarizing, by a third polarization controller (11c) and based on third routing data, the second optical pulses such that fourth optical pulses are provided and/or generated which are linearly polarized in a fifth polarization direction or in a sixth polarization direction perpendicular to the fifth polarization direction; and
- routing, by a third polarizing beam splitter (12c), the fourth optical pulses towards at least the third data processing device (10c) if the fourth optical pulses are polarized in the fifth polarization direction and towards at least a fifth data processing device associated with a fifth quantum key distribution party if the fourth optical pulses are polarized in the sixth polarization direction.

The method may further comprise, for the third optical pulses having been routed towards at least the fourth data processing device (in particular, towards at least one data processing device excluding the second data processing device):
- polarizing, by a fourth polarization controller (11d) and based on fourth routing data, the fourth optical pulses such that fifth optical pulses are provided and/or generated which are linearly polarized in a seventh polarization direction or in an eighth polarization direction perpendicular to the seventh polarization direction; and
- routing, by a fourth polarizing beam splitter (12d), the fourth optical pulses towards at least the fourth data processing device (10d) if the fifth optical pulses are polarized in the seventh polarization direction and towards at least a sixth data processing device associated with a sixth quantum key distribution party if the fifth optical pulses are polarized in the eighth polarization direction.

In general, the method may further comprise, for present optical pulses being present at a next polarization controller: polarizing, by the next polarization controller and based on next routing data, the present optical pulses such that next optical pulses are provided and/or generated which are linearly polarized in a next polarization direction; and routing, by a next polarizing beam splitter and based on next routing data, the next optical pulses based on the next polarization direction. The present optical pulses may have been routed from a previous polarizing beam splitter, e.g., the first, second, third, fourth, or fifth polarizing beam splitter.

The method may comprise determining at least one of the routing data (first routing data), the second routing data, the third routing data, the fourth routing data, and the fifth routing data in at least the first data processing device or another device associated with the first quantum key distribution party. At least one of the routing data, second routing data, the third routing data, the fourth routing data, and the fifth routing data may indicate a further quantum key distribution party or a further data processing device, in particular for establishing a shared key between the first data processing device and the further data processing device. The further quantum key distribution party may be one of the second, third, fourth, fifth, sixth, or another quantum key distribution party. The further data processing device may be one of the second, third, fourth, fifth, sixth, or another data processing device.

The method may comprise transmitting at least one of the routing data (first routing data), the second routing data, the third routing data, the fourth routing data, and the fifth routing data from at least the first data processing device or the other device associated with the first quantum key distribution party respectively to the (first) polarization controller, the second polarization controller, the third polarization controller, the fourth polarization controller, and the fifth polarization controller (i.e., at least one of the first routing data to the first polarization controller, the second data to the second polarization controller, etc.).

At least one of the first, second, third, fourth, fifth, and further optical pulses may be transmitted via optical fiber. For example, the first optical pulses may be transmitted via at least one first optical fiber and/or the second optical pulses may be transmitted via at least one second optical fiber and/or the third optical pulses may be transmitted via at least one third optical fiber, etc. Further, at least one of the first, second, third, fourth, fifth, and further optical pulses may be transmitted at least partially via another optical medium, e.g., air. In other words, at least one of the first, second, third, fourth, fifth, and further optical pulses may be transmitted via optical fiber may be transmitted via an optical channel (optical communication channel), which preferably comprises optical fibers and/or air segments.

The optical channel may correspond to a quantum communication channel. At least one of the first, second, third, fourth, fifth, and sixth data processing device may be connected to the optical channel. At least one of the first, second, third, and fourth polarization controller may be connected to the optical channel. At least one of the first, second, third, and fourth polarizing beam splitter may be connected to the optical channel.

With respect to the optical channel and/or transmitting optical pulses, the (involved) data processing devices may be arranged in a (bifurcating) tree topology or at least partially in a circular topology. In particular, the (involved) data processing devices may be connected by optical fibers (within an optical fiber network) forming a (bifurcating) tree topology or at least partially comprising a circular topology.

A pulse power (and/or pulse intensity) of the second optical pulses may (essentially) be preserved during routing (by the polarizing beam splitter). Further, the pulse power (and/or pulse intensity) of at least one of the third, fourth, and fifth optical pulses may (essentially) be preserved during routing (by the respective second, third, or fourth polarizing beam splitter).

In general, the pulse power of at least one of the third, fourth, and fifth optical pulses after passing the respective second, third, or fourth polarizing beam splitter may be reduced at most by 0.5 dB, preferably at most by 0.2 dB, more preferably at most by 0.1 dB.

In other words, if the second optical pulses are routed (to the second optical fiber) towards at least the second data processing device, no optical pulses may be routed (to the third optical fiber) towards the third data processing device. In turn, if the second optical pulses are routed (to the third optical fiber) towards at least the third data processing device, no optical pulses may be routed (to the second optical fiber) towards the second data processing device. The same may apply correspondingly to at least one of, preferably each of, the third, fourth, and fifth optical pulses.

The first polarization direction may be one of horizontal, vertical, diagonal, and anti-diagonal. Correspondingly, the second polarization direction may respectively be vertical, horizontal, anti-diagonal, or diagonal.

In general, the first polarization direction may correspond to a polarization angle from 0° to less than 180°. At least one of the third, fourth, fifth, sixth, seventh, and eighth polarization direction may be one of horizontal, vertical, diagonal, and anti-diagonal. At least one of the third, fourth, fifth, sixth, seventh, and eighth polarization direction may correspond to a polarization angle from 0° to less than 180°.

The third and the fourth polarization direction may both be different from the first and the second polarization direction, e.g., by a displacement angle between 5° and 45°. In general, each (employed) polarization direction may be unique, i.e., different from each further (employed) polarization direction. Alternatively, each polarization direction may be either horizontal or vertical. As a further alternative, each polarization direction may be either diagonal or anti-diagonal.

The bit sequence may be encoded in at least one of pulse intensity, pulse phase, and pulse time (e.g., time bin position). In general, a bit sequence encoding (of the bit sequence) may be independent from pulse polarization, in particular from a polarization direction. In other words, the polarization of the optical pulses may be free of information on the bit sequence.

The polarizing by the (first) polarization controller (and/or at least one of the second, third, fourth, and fifth polarization controller) may be carried out via stress-induced birefringence. As a result, losses due to polarizing may be kept to a minimum. The polarizing (of the first (and/or second and/or third and/or fourth) optical pulses) may comprise adjusting a birefringence property of a portion of an optical fiber (which is part of the (respective) polarization controller), in particular by twisting the portion of the optical fiber.

At least one of the first, the second, the third, the fourth, and the fifth polarization controller may for example be a manual fiber polarization controller.

The method may further comprise: receiving, by a (first) authentication device, a routing command comprising the routing data; authenticating the routing command by the authentication device; and polarizing the first optical pulses by the polarization controller based on the routing command having been authenticated.

The method may comprise corresponding steps for at least one of the second, third, fourth, and fifth polarization controller and corresponding optical pulses and corresponding authentication devices. For example, the method may comprise: receiving, by a second (third/fourth/fifth) authentication device, a second (third/fourth/fifth) routing command comprising the second (third/fourth/fifth) routing data; authenticating the second (third/fourth/fifth) routing command by the second (third/fourth/fifth) polarization controller; and polarizing the second (third/fourth/fifth) optical pulses by the second (third/fourth/fifth) polarization controller based on the second (third/fourth/fifth) routing command having been authenticated.

The (second/third/fourth/fifth) authentication device may be part of the (second/third/fourth/fifth) polarization controller. In this case, the method may comprise: receiving, by the (second/third/fourth/fifth) polarization controller, a (second/third/fourth/fifth) routing command comprising the (second/third/fourth/fifth) routing data; authenticating the (second/third/fourth/fifth) routing command by the (second/third/fourth/fifth) polarization controller; and polarizing the first (second/third/fourth/fifth) optical pulses by the (second/third/fourth/fifth) polarization controller based on the (second/third/fourth/fifth) routing command having been authenticated.

Alternatively, the authentication device may be (securely) connected to the polarization controller. In this case, the method may further comprise transmitting a control signal from the authentication device to the polarization controller for polarizing the first optical pulses based on the routing command having been authenticated. Analogous steps may be provided for at least one of the second, third, fourth, and fifth authentication device.

The routing data may indicate at least one of the second data processing device, the third data processing device, and the fourth data processing device. The second routing data may indicate at least the second data processing device and the fourth data processing device. The third routing data may indicate at least the third data processing device. At least one of or each of the routing data, the second routing data, and the third routing data may additionally indicate the first data processing device. In particular, the routing data may indicate the two data processing devices for which a shared key shall be established (and/or the optical path between the two data processing devices).

The method may comprise transmitting the routing command from the first data processing device or an external routing server (or one of the second, third, and fourth data processing device) to the authentication device (or one of the second, third, and fourth authentication device). The method may comprise generating the routing command in one of the first, second, third, fourth data processing device, and the external routing server.

The external routing server may be external to the quantum key distribution network or the system for quantum key distribution. In particular, the external routing server may be free of an optical fiber of the quantum key distribution network or the system for quantum key distribution.

The method may comprise receiving, by the external routing server, a routing request from at least one of the first, second, third, and fourth data processing device. Generating the routing command may be based on received routing requests, preferably using a first-in-first-out rule.

The authenticating of the routing command may comprise verifying a signature of the routing command. The signature may in particular be a one-time signature. Alternatively, other signature schemes may be employed.

The method may comprise providing the routing command with the signature, e.g., by one of the first, second, third, fourth data processing device, and the external routing server.

The one-time signature may be a Lamport (one-time) signature.

The method may comprise monitoring signal losses along at least one optical fiber which the first optical pulses and the second optical pulses pass. For example, the signal losses along the optical fibers between the first data processing device and one of the second, third, and fourth data processing device may be monitored, in particular for verifying a proper operation of the polarization controllers (and polarizing beam splitters) between the first data processing device and one of the second, third, and fourth data processing device.

The method may comprise determining the shared key shared between the first data processing device and one of the second, third, and fourth data processing device from the bit sequence by quantum key distribution, in particular, using classical post-processing and classical data transmission.

In particular, the method may comprise generating the bit sequence, preferably by a random number generator. The method may comprise generating the optical pulses based on the bit sequence (e.g., using a laser), in particular encoding the bit sequence into a plurality of (first) optical pulses (signal pulses). The method may comprise receiving and/or measuring optical pulses in the second, third, or fourth data processing device and determining a received bit sequence in the second, third, or fourth data processing device. The method may further comprise performing at least one of basis reconciliation, error correction, and privacy amplification in the first data processing device and one of the second, third, and fourth data processing device, in particular for establishing a shared key.

The first, the second, and third data processing device may each be remote from another. The first, the second, third, and the fourth data processing device may each be remote from another.

The monitoring of the signal losses may comprise comparing, by the first data processing device and/or the second data processing device, transmittal power values (and/or transmittal intensity values) of test pulses when being transmitted by the first data processing device with receival power values (and/or receival intensity values) of the test pulses when being received by the second data processing device. In other words, the monitoring may be carried out using so-called transmittometry.

Additionally or alternatively, the monitoring may comprise determining, by the first data processing device or the second data processing device, backscattered test pulse components of (further) test pulses transmitted by the first data processing device or the second data processing device. In other words, the monitoring may be carried out using optical time-domain reflectometry.

An average test pulse intensity of the (further) test pulses may be greater than an average optical pulse intensity of the optical pulses, for example, by a factor of between 10³ and 10¹⁰, preferably between 10⁵ and 10⁸. Each of the optical pulses may for example comprise between 10² and 10⁵ photons. Each of the (further) test pulses may for example comprise between 10⁸ and 10¹² photons.

The method may comprise repeatedly determining the signal losses. For example, the signal losses may be repeatedly determined within a time interval from 1 ms to 50 s, preferably from 20 ms to 10 s, in particular from one of 10 ms to 100 ms, 50 ms to 500 ms, 100 ms to 1000 ms, 0.5 s to 5 s, and 5 s to 10 s.

The method may comprise determining an intrusion event based on the signal losses and/or aborting (terminating) determining of the shared key based on the signal losses. The method may comprise discarding the shared key based on the signal losses. Determining the intrusion event may comprise classifying the signal losses (in particular, depending on the transmission line position) according to a signal loss type (in particular, depending on the transmission line position). The signal loss type may be at least one of a deviation of an exponential decay of power, a low-quality splice, a physical connector, an angled physical connector, and a fiber bend. Further, the signal may have been (partially) intercepted if one of the polarization controllers has not fully polarized the optical pulses in the required polarization direction, e.g., vertically. In this case, parts of the optical pulses that are horizontally polarized would be routed towards an unintended data processing device. Another source of losses may include an additional beam splitter along the transmission line, in particular along one of the optical fibers, routing optical pulses towards an unintended data processing device.

The system may comprise a second polarization controller configured to polarize, based on second routing data, the second optical pulses routed towards at least the second data processing device such that third optical pulses are provided which are linearly polarized in a third polarization direction or in a fourth polarization direction perpendicular to the third polarization direction; and/or a second polarizing beam splitter configured to route the third optical pulses towards at least the second data processing device if the third optical pulses are polarized in the third polarization direction and towards at least a fourth data processing device associated with a fourth quantum key distribution party if the third optical pulses are polarized in the fourth polarization direction.

The aforementioned embodiments related to the method for quantum key distribution can be provided correspondingly for the system for quantum key distribution and/or the quantum key distribution network and vice versa.

### Description of embodiments

In the following, embodiments, by way of example, are described with reference to the Figures, in which:
- Fig. 1: shows a graphical representation of a system for quantum key distribution involving three parties,
- Fig. 2: shows a graphical representation of a quantum key distribution network,
- Fig. 3: shows graphical representation of a method for quantum key distribution,
- Fig. 4: shows a reflectogram resulting from optical time-domain reflectometry, and
- Fig. 5: shows detail views of the reflectogram.

### System for quantum key distribution

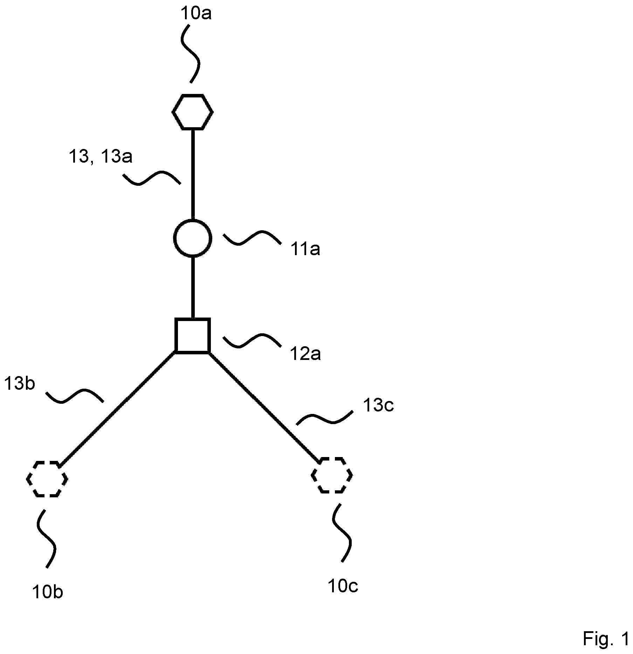

In Fig. 1, a graphical representation of a system for quantum key distribution involving three parties, respectively associated with a first data processing device 10a, a second data processing device 10b, and a third data processing device 10c, is shown.

The first, second, and third data processing device 10a, 10b, 10c are connected with each other by optical fibers 13, including a first optical fiber 13a, a second optical fiber 13b, and a third optical fiber 13c. Each of the first, second, and third data processing device 10a, 10b, 10c may be configured to transmit and receive optical pulses (e.g., via a 1550 nm or 1530 nm laser) which encode bit sequences for establishing (pairwise) shared keys. In particular, the first data processing device is configured to transmit first optical pulses which encode a bit sequence to establish a shared key either with the second data processing device 10b or the third data processing device 10c.

The first, second, and third data processing device 10a, 10b, 10c may each comprise a (classical) processor and a memory. The first, second, and third data processing device 10a, 10b, 10c can exchange classical signals and/or quantum signals, for example via the optical fibers 13a, 13b, 13c, which may constitute a classical channel and/or a quantum channel. Classical signals (including signals for QKD post-processing, routing requests, and routing commands) may also be exchanged via a separate classical channel. The first, second, and third data processing device 10a, 10b, 10c may comprise corresponding communication interfaces.

In case the (QKD-)shared key shall be established between the first data processing device 10a and the second data processing device 10b, no optical pulses shall reach the third data processing device 10c in this instance. Conversely, in case the shared key shall be established between the first data processing device 10a and the third data processing device 10c, no optical pulses shall reach the second data processing device 10b.

Such a routing of optical pulses is achieved by using a (first) polarization controller 11a together with a (first) polarizing beam splitter 12a. The polarizing beam splitter 12a bifurcates optical pulses, directing optical pulses with different polarizations into separate paths towards different QKD parties. The polarization controller 11a enables the sending party ("Alice") associated with the first data processing device sender (Alice) to selectively change the polarization of their signals (optical pulses). With the polarization controller 11a, the polarization can be dynamically altered between, for instance, a horizontal and a vertical polarization direction. This enables the sending party to determine in real-time which receiving party ("Bob") - associated with the second or the third data processing device 10b, 10c - to communicate with.

To this end, the first data processing device initiates the change of the polarization of the signals with the polarization controller 11a such that the signal is transmitted through the polarization beamsplitter to either the second data processing device 10b or the third data processing device 10c. Based on the changed polarization of the signal, the signal is directed to a particular data processing device 10b, 10c. For example, a signal with horizontal polarization reaches only the second data processing device 10b, while a signal with vertical polarization reaches only the third data processing device 10c. Of note, the second data processing device 10b does not receive any part of the signal / optical pulses intended for the third data processing device 10c and vice versa. Hence, a potential receiving party cannot eavesdrop on the signal that was not intended for them.

The polarization controller 11a is based on the principle of stress-induced birefringence. Such a polarization controller manipulates the polarization state of the optical pulses within a (single-mode) optical fiber, which is wound around one or several spools, forming distinct fractional wave plates.

The degree of the applied birefringence is determined by several factors, in particular, the size of the cladding of the optical fiber, the fixed diameter of the spools, the number of fiber loops per spool, and the wavelength of the optical pulses. The fast axis of the optical fiber, which is oriented along the plane of the spool, is finely tuned relative to the polarization vector of the transmitted light. This adjustment may be done by rotating paddles which twist the fiber.

The bend loss in the commercially available polarization controllers is less than 0.1 dB. The insertion loss in polarization beamsplitters can be less than 0.5 dB for each path. The combined loss is substantially less than the typical insertion loss in the optical switches, which is around 1.0 dB.

### Quantum key distribution network

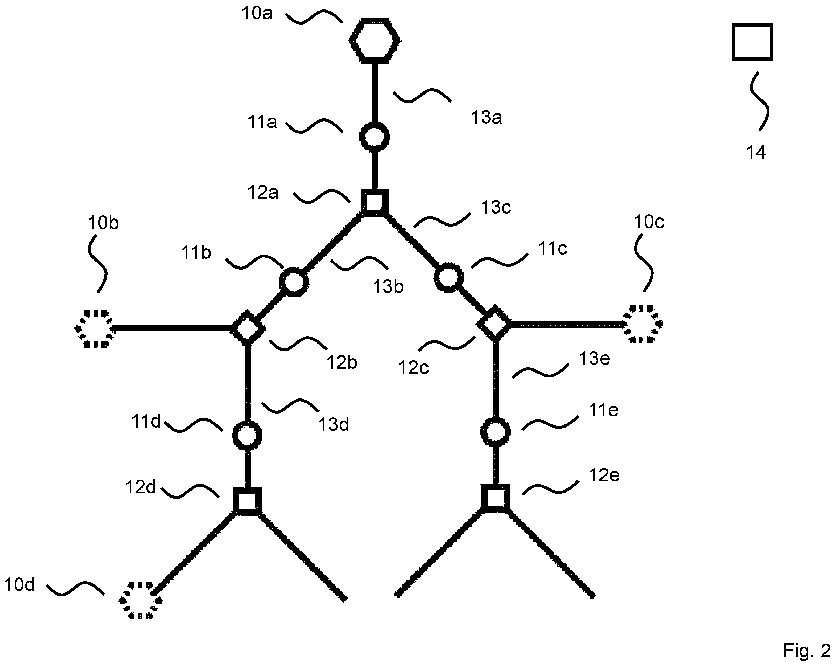

Fig. 1 may be considered to illustrate the simplest case of the principle according to the claimed invention with a quantum key distribution network involving three parties including one sender and two receivers. In Fig. 2, a larger quantum key distribution network with more than three parties is shown. The quantum key distribution network comprises several data processing devices, in particular, in addition to the first, second, and third data processing device 10a, 10b, 10c, an analogously configured fourth data processing device 10d. Further, a first, second, third, fourth, and fifth polarization controller 11a, 11b, 11c, 11d, 11e, together with a first, second, third, fourth, and fifth polarizing beamsplitter 12a, 12b, 12c, 12d, 12e is provided.

Each polarizing beamsplitter 12a, 12b, 12c, 12d, 12e can be considered to represent a branching point and/or a decision point, allowing the second party / the first data processing device 10a to determine which path their signal should take and which further party (the second, third, or fourth data processing device 10, 10c, 10d or another data processing device) shall receive the signal. Different parties are positioned at the ends of such branched optical fibers, with either one or many senders. For a selected polarization, signal routing between branches guarantees the complete signal sending to the selected branch and cutting off the signal transmission through the other branch.

In particular, first optical pulses which encode a bit sequence for quantum key distribution are transmitted by the first data processing device 10a, passing a first optical fiber 13a. The first optical pulses are polarized by the polarization controller (11a) based on routing data, resulting in second optical pulses. The second optical pulses are linearly polarized in a first polarization direction or in a second polarization direction perpendicular to the first polarization direction, depending on whether the second optical pulses shall be directed along a second optical fiber 13b (towards at least the second data processing device 10b and the fourth data processing device 10d) or along a third optical fiber 13c (towards at least the third data processing device 10c).

Subsequently, the second optical pulses are routed by the polarizing beam splitter 12a, either towards at least the second data processing device 10b if the second optical pulses are polarized in the first polarization direction and towards at least a third data processing device 10c if the second optical pulses are polarized in the second polarization direction.

If the second optical pulses have been routed towards at least the second data processing device 10b, i.e., along the second optical fiber 13b, the second optical pulses are further polarizing by the second polarization controller 11b based on second routing data. Thus, third optical pulses are generated which are linearly polarized in a third polarization direction or in a fourth polarization direction perpendicular to the third polarization direction depending on the second routing data. Then, the third optical pulses are routing by the second polarizing beam splitter 12b towards at least the second data processing device 10b if the third optical pulses are polarized in the third polarization direction and along a fourth optical fiber 13d towards at least the fourth data processing device 10d if the third optical pulses are polarized in the fourth polarization direction.

If, on the other hand, the second optical pulses have been routed towards at least the third data processing device (along the third optical fiber 13c) the second optical pulses are polarized by the third polarization controller 11c based on third routing data, generating fourth optical pulses. The fourth optical pulses are linearly polarized in a fifth polarization direction or in a sixth polarization direction perpendicular to the fifth polarization direction depending on the third routing data. Subsequently, the fourth optical pulses are routed, by the third polarizing beam splitter (12c) towards at least the third data processing device (10c) if the fourth optical pulses are polarized in the fifth polarization direction and towards at least a fifth data processing device (along a fifth optical fiber 13e) if the fourth optical pulses are polarized in the sixth polarization direction.

Further routing may take place analogously using further (next) polarization controllers and polarizing beamsplitters along further optical fibers of the quantum key distribution network.

Optical amplifiers, preferably Erbium-doped fiber amplifiers or Raman amplifiers may be provided at the optical fibers (of the system and/or the QKD network). It may be provided that an amplifier distance between two adjacent amplifiers is between 30 km and 200 km, preferably between 30 km and 60 km. The plurality of optical amplifiers may be arranged equidistantly along the optical fibers.

### Routing authentication

Each polarization controller comprises or is connected to an authentication device (which may comprise a processor and a memory). The authentication device is used for activating and/or controlling the polarization controller in response to receiving an authenticated command and/or routing data.

Such commands may originate from one of the data processing devices 10a, 10b, 10c, 10d of the QKD network via a classical communication channel. To this end, the authentication device comprises a classical communication interface.

For example, in a QKD network with one sender and multiple receivers, only the sender, e.g., the first data processing device 10a, determines which further data processing device 10b, 10c, 10d is next in line for signal reception. If QKD shall be performed (a shared key be established) between the first data processing device 10a and the fourth data processing device 10d, corresponding routing commands should be received in the (first) authentication device of the first polarization controller 11a, the second authentication device of the second polarization controller 11b and the third authentication device of the third polarization controller 11c such that optical signals / optical pulses are routed along the first optical fiber 13a, the second optical fiber 13b and the fourth optical fiber 13d.

Alternatively, an external routing server 14 (comprising a processor, a memory and being configured to classically communicate with the data processing devices) may ensure that the distribution of shared keys follows predefined rules, for example a first-in-first-out rule, where requests for key distribution among different parties are processed in a sequential order.

All routing commands should be authenticated, for instance using the Lamport one-time signature scheme. The Lamport one-time signature scheme is a method for creating a digital signature of a message (in the present case, a routing command) using hash functions and comprises the following steps:
- Two sets of random numbers are generated, which correspond to private keys. Each set comprises the binary values 0 and 1. These numbers are then hashed, and the resulting hashes constitute the public key.
- To sign a message (routing command), the hash of the message is processed bit by bit. For each bit of the hash of the message, the corresponding number from one of the two initial sets is selected (depending on whether the bit is 0 or 1). The collection of the selected numbers forms the signature.
- To verify the signature, each number of the signature is hashed and the result compared with the public key. If they match, the signature is determined as valid.

The security of the Lamport signature stems from the one-way property of hash functions, making it computationally infeasible to derive the original data from its hash. However, because each set of numbers can only be securely used once, new keys must be used for each signature.

### Quantum key distribution

Once the two parties of the QKD network, for which a shared key shall be generated, have been determined and the corresponding routing of optical pulses from the transmitting party (e.g., the first data processing device 10a) to the receiving party (e.g., the second data processing device 10b) has been established, a QKD protocol is carried out between the transmitting party and the receiving party.

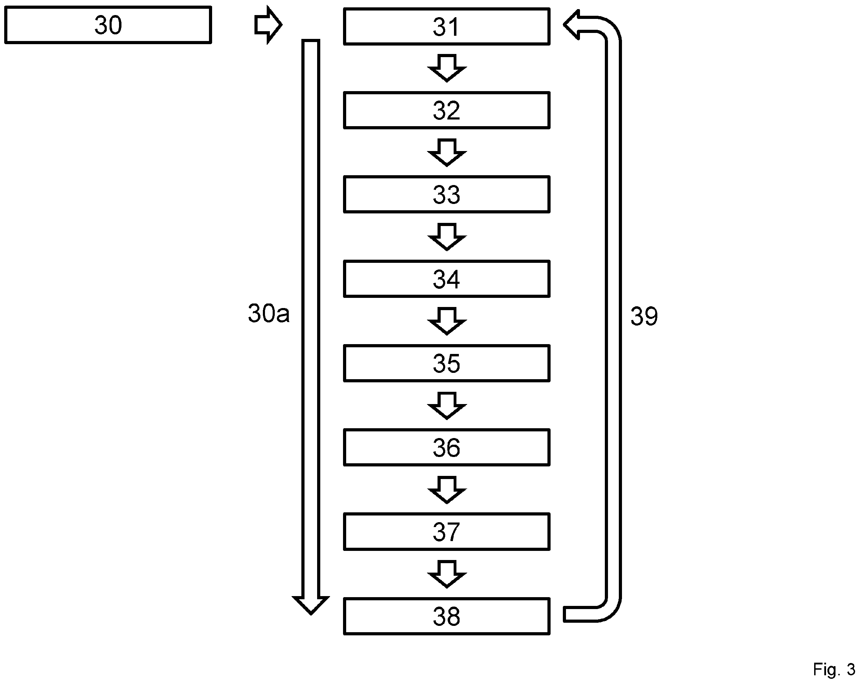

The QKD protocol may be a standard protocol not relying on polarization for encoding message bits. Alternatively, - see Fig. 3 - a QKD protocol may be employed that provides additional security by monitoring signal leakages along the quantum channel between the two parties (i.e., the optical fibers, along which the optical pulses are transmitted).

In the following, the optical path between the two parties (comprising the optical fibers inbetween) will also be referred to as transmission line. Further, the first data processing device 10a will represent the transmitting device, while the second data processing device 10b will represent the receiving device. Other configurations of transmitting device and receiving device may be provided.

The first data processing device 10 and the second data processing device 11 are connected via an authenticated (public) classical channel and the transmission line serves as a quantum channel.

In an initial step 30, an initial loss profile of the transmission line is determined, which essentially represents the natural signal losses in the transmission line. The initial loss profile may be shared between the first and the second data processing device 10a, 10b via the authenticated classical communication channel.

In a first step 31, physical loss control of the transmission line is carried out (by the first and the second data processing device 10a, 10a). Notably, a loss profile is determined and, preferably, shared between the first and the second data processing device 10a, 10b via the classical channel.

By comparing the thus updated loss profile with the initial loss profile, a fraction *r_{E}* of the signal possibly seized by an eavesdropper may be determined. For example, if, in a section of the transmission line not comprising optical amplifiers, the natural signal losses in this section are represented by *r*₀ and the eavesdropper intercepts an intercepted fraction *r_{E}* of the signal, then the intercepted fraction *r_{E}* can be derived from total losses *rₜ* via the following relation: (1 - *rₜ*) = (1 - *r_{E}*) (1 - *r*₀).

If the intercepted fraction *r_{E}* grows too large, so that the legitimate users lose their informational advantage over the eavesdropper, the protocol is terminated. Termination of the protocol depends on the length of the transmission line and the distance between two of the optical amplifiers. The protocol may in particular be terminated if an effective key rate is below a target key rate value.

In a second step 32, using a random number generator, a bit sequence of sequence length *L* is determined in the first data processing device 10a.

In a third step 33, the bit sequence is encoded into a quantum signal comprising a series of *L* optical pulses, which are transmitted to the second data processing device 11b, passing the respective polarization controllers and polarizing beam splitters along the transmission line. The signal bits 0 and 1 respectively correspond to coherent states |*γ*₀〉 and |*γ*₁〉. The particular way of encoding 0 and 1 signal bits into parameters of the coherent states |*γ*_{0〉} and |*γ*₁〉 may vary. For example, the signal bits may be encoded into coherent light pulses with different intensities and same phases or, alternatively, into coherent light pulses with same intensities and different phases.

In a fourth step 34, the quantum signals / optical pulses may be amplified by a plurality of optical amplifiers provided along the transmission line. The optical amplifiers may be provided equidistantly along the transmission line. Each respective optical amplifier of the plurality of optical amplifiers compensates natural signal losses up along the transmission line from the preceding optical amplifier up until the respective optical amplifier.

In a fifth step 35, the quantum signals /optical pulses are received and measured by the second data processing device 10b. A corresponding received bit sequence is determined in the second data processing device 10b. It may be assumed that all determined artificial losses represent the intercepted fraction *r_{E}* of the signal.

In a sixth step 36, inconclusive signal bits, which correspond to quantum measurements in the second data processing device 10b determined as inconclusive, are discarded from the bit sequence in the first data processing device 10a and the received bit sequence in the second data processing device 10b. To this end, bit positions of the inconclusive signal bits are transmitted via the classical channel from the second data processing device 10b to the first data processing device 10a.

In a seventh step 37, by disclosing a part of the bit sequence and/or the received bit sequence via the classical channel, an error rate may be determined and error correction may be performed on the bit sequence and the received bit sequence by the first data processing device 10a and the second data processing device 10b, respectively. The error correction maybe carried out employing, e.g., low-density parity-check (LDPC) codes. As a result, an error corrected bit sequence is determined in the first and the second data processing device 10a, 10b.

In an eighth step 38, an amplified key sequence is determined from the error corrected bit sequence using privacy amplification. The amplified key sequence is shorter than the error corrected bit sequence and any potential eavesdropper has none or negligibly small information on the amplified key sequence. The amplified key sequence represents a shared key (sequence) between the first and the second data processing device 10a, 10b as a result of quantum key distribution.

The steps from the first step 31 to the eighth step 38 may be repeated (arrow 39) and the amplified key sequences concatenated to a (total) shared key until a total length of the shared key is as large as required by the application at hand.

### Physical loss control

During all steps 31 to 38, the transmission line is continuously controlled (arrow 30a), i.e., a signal loss profile is determined and, preferably, shared between the first and the second data processing device 10a, 10b via the classical channel. In case where the integrity of the transmission line is compromised to the extent of a considerable risk that the eavesdropper would decipher the scattering losses, the protocol may be terminated.

The (physical) loss control may allow for verifying that the polarization controllers (together with the polarizing beam splitters operate properly (i.e., polarization is fully switched, and there is no signal leakage to an unintended branch).

The physical loss control (step 31) may also be carried out interleaved with transmitting the quantum signals for the shared key sequences. For example, the optical pulses (for the shared key sequences) may be transmitted alternating with test (signal) pulses for physical loss control.

The physical loss control is based on the analysis of scattered components of the test pulses sent through the transmission line. The test pulses comprise a comparably high intensity with respect to the optical pulses. The physical loss control may be carried out using transmittometry or optical time-domain reflectometry (OTDR).

When using transmittometry, the first data processing device 10a transmits test pulses (modulated signals of high intensity) in the specified polarization(s), towards the second data processing device 10b. Upon receiving the test pulses, the second data processing device 10b communicates with the first data processing device 10a over the classical authenticated channel, comparing spectral power peaks at both input and output levels to infer the overall signal leakage along the transmission path. The high frequency-modulation of the test pulses is utilized to mitigate the 1/f noise. Having a pre-established baseline of uniform natural scattering losses (determined at the initial step 30, when the eavesdropper is guaranteed to be absent) the first data processing device 10a and the second data processing device 10b are able to measure the local leakage accurately.

Optical time-domain reflectometry can be done by the first data processing device 10a or the second data processing device 10b or both (the parties communicate control results of control via the authenticated classical channel). The data processing device performing the procedure (testing device) sends high-intensity test pulses into the transmission line with proper polarization (so that the test pulse propagates to the other data processing device). As a test pulse travels through the transmission line, its parts are backscattered at various points of the optical fibers. Since backscattered test pulse components maintain the polarization of the test pulse, the backscattered test pulse components retrace their path back and are subsequently detected at the testing data processing device. The analysis of the power of the backscattered test pulse components as a function of the time delay is averaged over many test pulses, yielding a comprehensive loss profile of the transmission line.

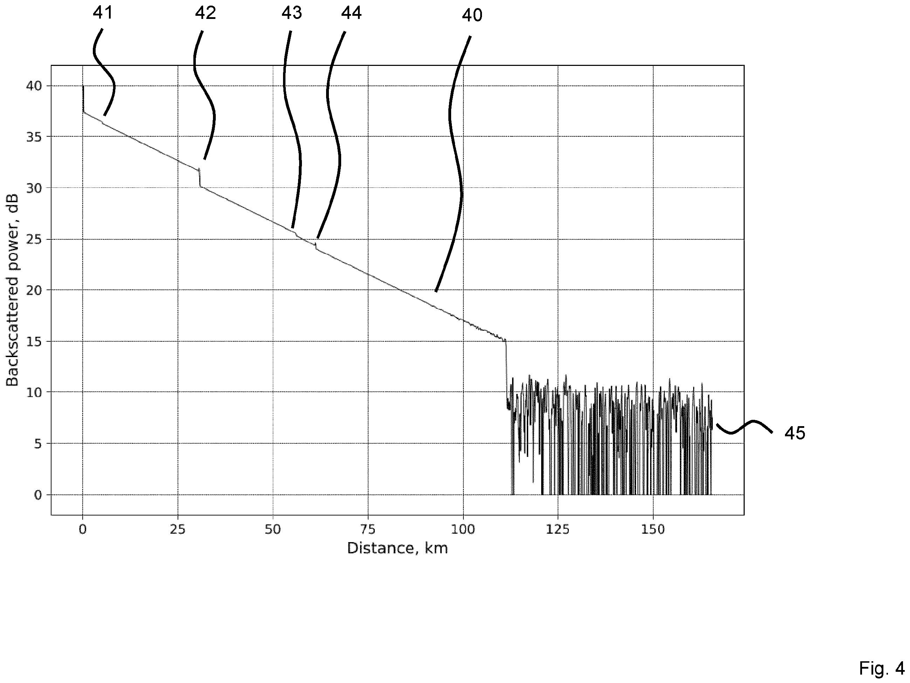

Fig. 4 shows an exemplary reflectogram resulting from optical time-domain reflectometry. The reflectogram shows the logarithmic power of backscattered test pulse components as a function of distance between a reflectometer and the corresponding discontinuity. The reflectometer may be arranged within or close to the first data processing device 10a or the second data processing device 10b.

The natural signal losses along the transmission line are due to homogenous scattering and result in an exponential decay of power corresponding to linear regions 40. Reflectogram features 41 to 44 comprising deviations from the exponential decay of the reflectogram curve, in particular sharp peaks and/or drops in the reflectogram curve allow for classifying the signal losses at the corresponding position of the transmission line. This is especially useful at the initial step 30, where identifying and mitigating local losses is important for comparison with determined losses during key exchange.

The reflectogram features 41 to 44 generally correspond to imperfections of the transmission line and may represent low-quality splices, bends and different connectors. Scattering losses from such regions are localized with respect to the transmission line. Peaks in the reflectogram features 41 to 44 may result from an excessive scattering which in the case of physical connectors are due to the test pulses undergoing Fresnel reflection. Noisy region 45 at the right-hand side of the reflectogram represents the end of the backscattered signal.

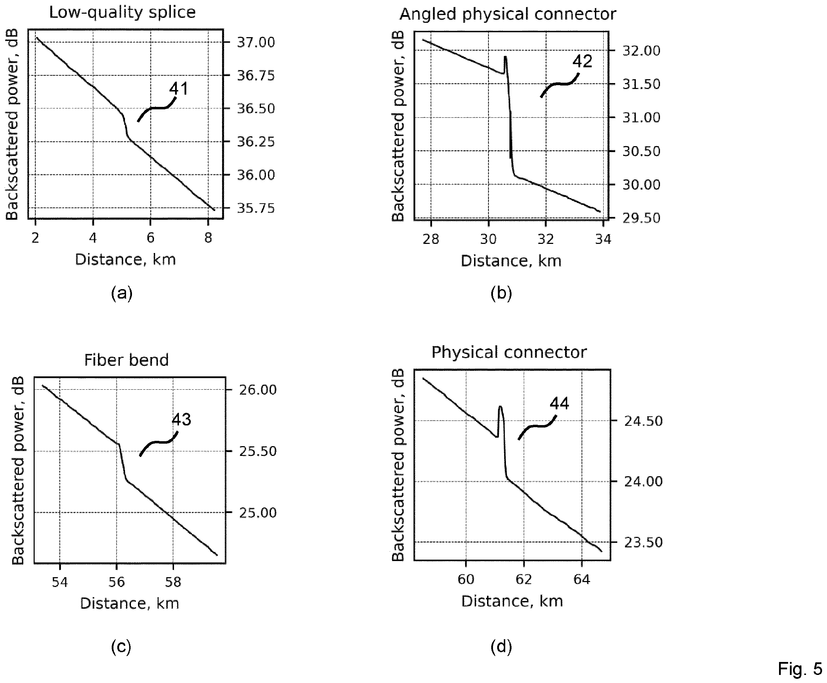

Fig. 5 shows detail views of the reflectogram which represent the respective reflectogram features 41 to 44. Reflectogram feature 41 corresponds to a low-quality splice within the optical fiber; reflectogram feature 42 corresponds to an angled physical connector of the optical fiber; reflectogram feature 43 corresponds to a bend of the optical fiber; and reflectogram feature 44 corresponds to a further physical connector.

The features disclosed in this description, the figures and/or the claims may be material for the realization of various embodiments, taken in isolation or in various combinations thereof.

## Claims

1. Method for quantum key distribution in a system which comprises a first data processing device (10a) associated with a first quantum key distribution party, a polarization controller (na), and a polarizing beam splitter (12a), the method comprising:
- transmitting, by the first data processing device (10a), first optical pulses which encode a bit sequence for quantum key distribution;
- polarizing, by the polarization controller (11a) and based on routing data indicating a further quantum key distribution party or a further data processing device, the first optical pulses such that second optical pulses are provided which are linearly polarized in a first polarization direction or in a second polarization direction perpendicular to the first polarization direction; and
- routing, by the polarizing beam splitter (12a), the second optical pulses
- towards at least a second data processing device (10b) associated with a second quantum key distribution party if the second optical pulses are polarized in the first polarization direction and
- towards at least a third data processing device (10c) associated with a third quantum key distribution party if the second optical pulses are polarized in the second polarization direction.

2. The method of claim 1, further comprising for the second optical pulses having been routed towards at least the second data processing device (10b):
- polarizing, by a second polarization controller (11b) and based on second routing data, the second optical pulses such that third optical pulses are provided which are linearly polarized in a third polarization direction or in a fourth polarization direction perpendicular to the third polarization direction; and
- routing, by a second polarizing beam splitter (12b), the third optical pulses towards at least the second data processing device (10b) if the third optical pulses are polarized in the third polarization direction and towards at least a fourth data processing device (10d) associated with a fourth quantum key distribution party if the third optical pulses are polarized in the fourth polarization direction.

3. The method of claim 1 or 2, wherein a pulse power of the second optical pulses is essentially preserved during routing by the polarizing beam splitter (12a).

4. The method of any of the preceding claims, wherein the first polarization direction is one of horizontal, vertical, diagonal, and anti-diagonal.

5. The method of any of the preceding claims, wherein the bit sequence is encoded in at least one of pulse intensity, pulse phase, and pulse time.

6. The method of any of the preceding claims, wherein the polarizing by the polarization controller (11a) is carried out via stress-induced birefringence.

7. The method of any of the preceding claims, further comprising:
- receiving, by an authentication device, a routing command comprising the routing data;
- authenticating the routing command by the authentication device; and
- polarizing the first optical pulses by the polarization controller (11a) based on the routing command having been authenticated.

8. The method of claim 7, further comprising transmitting the routing command from an external routing server (14) to the authentication device.

9. The method of claim 7 or 8, wherein the authenticating of the routing command comprises verifying a one-time signature of the routing command.

10. The method of claim 9, wherein the one-time signature is a Lamport signature.

11. The method of any of the preceding claims, further comprising monitoring signal losses along at least one optical fiber (13) which the first optical pulses and the second optical pulses pass.

12. The method of claim 11, wherein the monitoring of the signal losses comprises:
- comparing, by the first data processing device (10a) and/or the second data processing device (10b), transmittal power values of test pulses when being transmitted by the first data processing device (10a) with receival power values of the test pulses when being received by the second data processing device (10b) and/or
- determining, by the first data processing device (10a) or the second data processing device (10b), backscattered test pulse components of further test pulses transmitted by the first data processing device (10a) or the second data processing device (10b).

13. System for quantum key distribution, comprising:
- a first data processing device (10a) associated with a first quantum key distribution party and configured to transmit first optical pulses which encode a bit sequence for quantum key distribution;
- a polarization controller (11a) configured to polarize, based on routing information indicating a further quantum key distribution party or a further data processing device, the first optical pulses such that second optical pulses are provided which are linearly polarized in a first polarization direction or in a second polarization direction perpendicular to the first polarization direction; and
- a polarizing beam splitter (12a) configured to route the second optical pulses
- towards at least a second data processing device (10b) associated with a second quantum key distribution party if the second optical pulses are polarized in the first polarization direction and
- towards at least a third data processing device (10c) associated with a third quantum key distribution party if the second optical pulses are polarized in the second polarization direction.

14. The system of claim 13, further comprising:
- a second polarization controller (11b) configured to polarize, based on second routing data, the second optical pulses routed towards at least the second data processing device (10b) such that third optical pulses are provided which are linearly polarized in a third polarization direction or in a fourth polarization direction perpendicular to the third polarization direction; and
- a second polarizing beam splitter (12b) configured to route the third optical pulses towards at least the second data processing device (10b) if the third optical pulses are polarized in the third polarization direction and towards at least a fourth data processing device (10d) associated with a fourth quantum key distribution party if the third optical pulses are polarized in the fourth polarization direction.

15. Quantum key distribution network comprising the system for quantum key distribution according to claim 13 or 14, the second data processing device (10b), and the third data processing device (10c).
